# EUROPEAN PATENT APPLICATION

(11) **EP 4 804 728 A1**
(43) Date of publication of application: **09.09.2026**
(21) Application number: 25161362.6
(22) Date of filing: 03.03.2025
(51) Int. Cl.: H05B 45/10, H05B 45/46

(54) **CIRCUIT ARRANGEMENT FOR A VEHICLE LAMP**

(71) Applicant: ZKW Group GmbH, 3250 Wieselburg (AT)
(72) Inventor: Seitl, Daniel, 3542 Gföhl (AT); Haas, Erik, 3203 Rabenstein (AT); Bierwipfl, Christoph, 3376 St. Martin (AT)
(74) Representative: Patentanwaltskanzlei Matschnig & Forsthuber OG

(57) **Abstract**

The invention relates to a circuit arrangement (1) for a vehicle lamp, comprising a number of N light units, a first electronic switch (5), a second electronic switch (6), a logic circuit (7) and a driver unit (8) that comprises N+1 current regulators, N+1 data registers and a communication interface (17), wherein each light unit (2, 3, 4) comprises a first LED type (21) in a first LED path (23) and a second LED type (22) in a second LED path (24), wherein each light unit (2, 3, 4) is connected to one current regulator (9, 10, 11) providing an individual current (I1, I2, I3) to each light unit (2, 3, 4), wherein a non-conducting conduction state of the first electronic switch (5) interrupts the first LED path (23) and wherein a non-conducting conduction state of the second electronic switch (6) interrupts the second LED path (24), wherein the logic circuit (7) is configured to alternately change on the basis of a control current (Ic) the conduction state of the electronic switches (5, 6), wherein each data register is configured to store data representative of one current (I1, I2, I3, Ic), wherein the data in each of the N+1 data registers (13, 14, 15, 16) is configurable through the communication interface (17). The invention relates further to a vehicle lamp (25) and a vehicle (42).

## Description

The invention relates to a circuit arrangement for a vehicle lamp.

The invention also relates to a vehicle lamp comprising a circuit arrangement.

The invention further relates to a vehicle comprising a vehicle lamp.

Circuit arrangements for vehicle lamps typically include light units designed to provide various illumination and signaling functions. Modern designs increasingly incorporate LEDs due to their compact size, which enhances design flexibility, and their long operational lifespan, which contributes to economic efficiency. However, integrating these light units into a circuit arrangement for a vehicle lamp requires several electronic components to ensure proper operation.

In addition to components that regulate and control the electrical current supplied to the light units and their LED types, additional components are required to control the light output in order to fulfill various illumination and signaling functions. Since the power supply and control functions are typically managed separately, these circuit arrangements can become very expensive because they necessitate numerous cables and control units.

Consequently, there is a clear need to simplify such circuit arrangements to reduce the required resources while maintaining full functionality. Additionally, the circuit arrangement should be easily scalable to accommodate multiple light units.

The invention solves this problem by a circuit arrangement of the above-mentioned kind, wherein the circuit arrangement comprises a number of N light units, a first electronic switch, a second electronic switch, a logic circuit and a driver unit that comprises a number of N+1 current regulators, a number of N+1 data registers and a communication interface, wherein each light unit selected from the number of N light units is operable with an individual current selected from a number of N currents and wherein each light unit comprises a drive node, a first LED type and a second LED type, while said first LED type is connected in a first LED path between the drive node and a first common node, and while said second LED type is connected in a second LED path between the drive node and a second common node, wherein both, the first LED type and the second LED type are operable in a lighting state, which is either emitting or non-emitting, wherein each light unit is connected to one individual current regulator selected from the first N of the N+1 current regulators via its drive node, while said individual current regulator is configured to set the individual current for the corresponding light unit, wherein the first electronic switch and the second electronic switch are both operable in a conduction state, which is either conducting or non-conducting, wherein the first electronic switch is connected to the first common node, such that a non-conducting conduction state of the first electronic switch interrupts the first LED path in each light unit, wherein the second electronic switch is connected to the second common node, such that a non-conducting conduction state of the second electronic switch interrupts the second LED path in each light unit, wherein the logic circuit is connected to the first electronic switch and the second electronic switch, further said logic circuit is configured to alternately change on the basis of a control current the conduction state of the first electronic switch and the second electronic switch, such that only the first electronic switch or the second electronic switch is conducting at a time, wherein the N+1st current regulator is connected to the logic circuit and configured to set the control current, wherein each data register selected from the first N of the N+1 data registers is assigned to one individual current regulator selected from the first N of the N+1 current regulators and configured to store data representative of one corresponding individual current selected from the N currents, wherein the N+1st data register is assigned to the N+1st current regulator and configured to store data representative of the control current, wherein the data in each of the N+1 data registers is configurable through the communication interface.

N is a natural number and at least 1, preferably at least 2, and more preferably between 12 and 64.

The expression "set" a current can be interpreted as "limit" a current, since a current regulator functions as a current-limiting component that ensures the current remains at a specific level, regardless of variations in load or supply.

A "data register" is a storage element and configured to hold digital data that defines or influences the operation of the corresponding current regulator of the driver unit. In this sense, the expression "representative of" means that the data stored in the data register governs the operation of the assigned current regulator in such a way that the current remains at the level specified by the data. It is clear that this applies to a circuit arrangement when properly configured.

The "communication interface" refers to a means of data transmission.

The expression "corresponding" refers to a relationship between two items, where each item in one set is connected or assigned with an item in another set based on specific criteria, such as function, structure, or position. In this context, the term implies that each item in the first set is directly linked or paired with a corresponding item in the second set, with each item in the two sets having a defined, equivalent role or relationship. Therefore, the term "respective" could be seen as an alternative to "corresponding" when referring to the individual association of items in a set with their matching counterparts.

This circuit arrangement according to the invention allows the control of a first LED type and a second LED type in a light unit powered by a driver unit without the need of any additional control components. Furthermore, this circuit arrangement enables easy scalability if additional lighting units are required.

Advantageous embodiments of the invention are described in the dependent claims.

To ensure applicability for various light functions in a compact form, it may be provided that the first LED type differs from the second LED type in respect of the emitted light color in their emitting lighting states, while the emitted light color is selected from a group of light colors comprising white light, red light, green light, blue light, and amber light.

To improve electromagnetic compatibility, it may be provided that the driver unit is a high-side driver unit, wherein the anode of the first LED type and the anode of the second LED type of each light unit are connected to the corresponding current regulator via its drive node.

To enable a simpler and therefore more cost-effective design of the current regulators, it can alternatively be provided that the driver unit is a low-side driver unit, wherein the cathode of the first LED type and the cathode of the second LED type of each light unit are connected to the corresponding current regulator via its drive node.

To allow a stable control of the first electronic switch and the second electronic switch, it may be provided that the logic circuit comprises a first inverter circuit and a second inverter circuit, while said first inverter circuit being connected at its input to the N+1st current regulator and at its output to the first electronic switch and the input of the second inverter circuit, while said second inverter circuit is connected at its output to the second electronic switch.

To enable an easily extendable modular design, it may be provided that the circuit arrangement is assembled on one printed circuit board, that comprises a communication terminal connected to the communication interface and a supply terminal, which is configured to distribute a supply voltage to the whole circuit arrangement.

In a very practical design it may be provided that the vehicle lamp comprises N segments, while each segment selected from the N segments comprises an optical element and one individual light unit selected from the N light units, while said optical element is configured to be illuminated by the first LED type and the second LED type of the corresponding light unit, while the first LED type of the light units are collectively configured to carry out a first light function in their emitting lighting state, while the second LED type of the light units are collectively configured to carry out a second light function in their emitting lighting state.

Such a design is very practicable especially when the segments are arranged in a matrix configuration, such that they form together at least a part of a display.

It may be provided that said first light function and said second light function are different light functions selected from a group of light functions comprising daytime running light, position light, turn indicator light, tail light, break light, reverse light and rear fog light.

The invention is explained in more detail below with reference to the drawing:
Fig. 1 shows a circuit arrangement according to a first embodiment,
Fig. 2 shows a circuit arrangement according to a second embodiment,
Fig. 3 shows a circuit arrangement in a practical configuration with a voltage source,
Fig. 4 shows a circuit arrangement with a logic circuit in detail,
Fig. 5 shows assembled printed circuit comprising a circuit arrangement,
Fig. 6 shows a vehicle lamp and
Fig. 7 shows a vehicle.

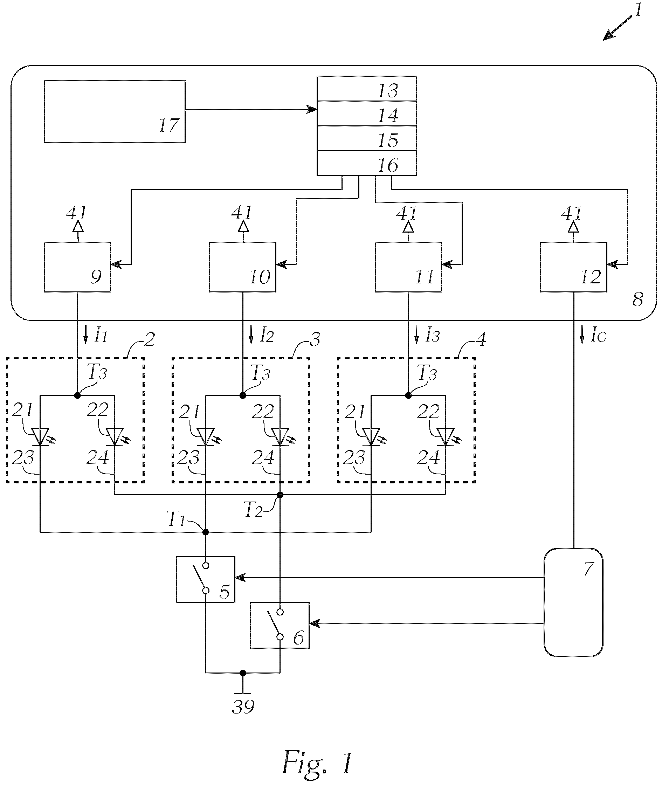

Fig. 1 shows a circuit arrangement 1. The circuit arrangement 1 comprises a first light unit 2, a second light unit 3 and a third light unit 4. The circuit arrangement 1 may comprise more or fewer light units than shown, therefore the circuit arrangement 1 may comprise a number of N light units, while N is a natural number and at least 1, preferably at least 2, and more preferably between 12 and 64. In the shown configuration N is three. The circuit arrangement 1 comprises a first common node T1 and a second common node T2, both shared by the three light units 2, 3, 4 or, more generally, by the N light units.

The circuit arrangement 1 further comprises a first electronic switch 5 and a second electronic switch 6, a logic circuit 7 and a driver unit 8. The first electronic switch 5, the second electronic switch 6 and the logic circuit 7 are described later.

The driver unit 8 comprises a first current regulator 9, a second current regulator 10, a third current regulator 11 and a fourth current regulator 12. The driver unit 8 may comprise more or fewer current regulators than shown. It is important that the driver unit 8 includes at least one additional current regulator 9, 10, 11, 12 compared to the number of light units 2, 3, 4 in the circuit arrangement 1. Therefore the driver unit 8 comprises a number of N+1 current regulators. Because N is three in the configuration shown, four current regulators 9, 10, 11, 12 are shown. The driver unit 8 can be integrated in an integrated circuit.

The driver unit 8 further comprises N+1 data registers, so four data registers 13, 14, 15, 16 and a communication interface 17, which are described later.

Each of the three light units 2, 3, 4, which in general represent a selection of N light units, can be operated with an individual current I1, I2, I3. Thus, in the configuration shown the first light unit 2 is operable with a first current I1, the second light unit 3 is operable with a second current I2 and the third light unit 4 is operable with a third current I3. Therefore, each individual current I1, I2, I3 in general represents a selection of N currents.

Furthermore each of the three light units 2, 3, 4 comprises a drive node T3, a first LED type 21 and a second LED type 22. Thus, in the shown configuration the first light unit 2 comprises a first LED type 21, a second LED type 22 and a drive node T3, the second light unit 3 comprises first LED type 21, a second LED type 22 and a drive node T3 and the third light unit 4 comprises a first LED type 21, a second LED type 22 and a drive node T3. The first LED type 21 of each light unit 2, 3, 4 is connected in a first LED path 23 between the corresponding drive node T3 and the first common node T1. The second LED type 22 of each light unit 2, 3, 4 is connected in a second LED path 24 between the corresponding drive node T3 and the second common node T2. Consequently each light unit 2, 3, 4 or generally speaking each light unit selected from the N light units comprises a first LED path 23 and a second LED path 24. A LED path 23, 24 may define a current path. Consequently, the first LED type 21 of the first light unit 2 is arranged in the first LED path 23, which can be seen as current path in which the first current I1 can flow through the first LED type 21 to the first common node T1 of the circuit arrangement 1. Similarly the second LED type 22 of the first light unit 2 is arranged in the second LED path 24, which can be seen as current path in which the first current I1 can flow through the second LED type 22 to the second common node T2 of the circuit arrangement 1. The same applies to the other light units 3, 4 and their individual currents, I2, I3.

The first LED type 21 and the second LED type 22 are operable in a lighting state, which is either emitting or non-emitting. Means, that if enough current flows through the LED type the LED type will emit light, i.e. the emitting lighting state, and if the current is below a certain value the LED type will emit no light, i.e. the non-emitting lighting state. The first LED type 21 preferably differs from the second LED type 22 in respect of the emitted light color in their emitting lighting states. The emitted light color can be selected from a group of light colors comprising white light, red light, green light, blue light, and amber light. The group of light colors may also be restricted to the mentioned light colors such that the group of light colors consists of the mentioned light colors. The emitted light color refers to the optical radiation generatable by the corresponding LED type, within a defined spectral range. The emitted light color can be characterized by its wavelength or correlated color temperature (CCT) in Kelvin (K). White light: Typically defined by a CCT range of 2700K to 6500K. Red light: Emitting in the wavelength range of approximately 620 nm to 750 nm. Green light: Emitting in the wavelength range of approximately 495 nm to 570 nm. Blue light: Emitting in the wavelength range of approximately 450 nm to 495 nm. Amber light: Emitting in the wavelength range of approximately 590 nm to 620 nm.

Each light unit 2, 3, 4 is connected to its corresponding current regulator 9, 10, 11 via its drive node T3. Thus, the first light unit 2 is connected via its drive node T3 to the first current regulator 9, the second light unit 3 is connected via its drive node T3 to the second current regulator 10 and the third light unit 4 is connected via its drive node T3 to the third current regulator 11. The drive node T3 could be the electronic node that is, seen from the electronic perspective of the light modules 2, 3, 4, closest to the driver unit 8 and thus closest to the corresponding current regulators 9, 10, 11. Each one of the three current regulators 9, 10, 11 is configured to set the individual current I1, I2, I3 for the corresponding light unit 2, 3, 4. While the expression "set" a current can be interpreted as "limit" a current, since a current regulator acts as a current limiting component which ensures that the current stays at a specific level, regardless of variations in load or supply. Thus, the first current regulator 9 sets the first current I1, the second current regulator 10 sets the second current I2 and the third current regulator 11 sets the third current I3.

The first electronic switch 5 and the second electronic switch 6 may be configured as n-channel Metal-Oxide-Semiconductor Field-Effect Transistors (MOSFETs). Both, the first electronic switch 5 and the second electronic switch 6 are operable in a specific conduction state, which is either conducting or non-conducting. The conducting conduction state may refer to the state in which the MOSFET allows current to flow from the drain to the source terminal, typically when a sufficient voltage is applied to its gate terminal, resulting in the creation of a conductive channel between the source and drain. On the other hand a non-conducting conduction state refers to the state in which the MOSFET prevents current flow between the drain and source terminals, typically when the gate voltage is insufficient to form a conductive channel, thereby blocking current or interrupting the current path. The first electronic switch 5 and the second electronic switch 6 may also be configured as p-channel MOSFETs, types of Bipolar Junction Transistors (BJT) or even types of Insulated Gate Bipolar Transistor (IGBTs), whereby combinations of these are possible too but preferably the first electronic switch 5 and the second electronic switch 6 are electronic switches of the same type.

The first electronic switch 5 is connected to the first common node T1. If the first electronic switch 5 is configured as MOSFET in a configuration as shown in Fig. 1, its drain will be connected to the first common node T1 and its source will be connected to a ground potential 39. The ground potential 39 may be defined by a voltage source 40 that provides supply voltage V1 to the circuit arrangement 1 and therefore establishes several first LED paths 23 via the driver unit 8, its current regulators 9, 10, 11, the individual light units 2, 3, 4, its first LED-types 21 and the first electronic switch 5. The configuration with the voltage source is described later in detail. In the same way the second electronic switch 6 is connected to the second common node T2. If the second electronic switch 6 is also configured as MOSFET in a configuration as shown in Fig. 1, its drain will be connected to the second common node T2 and its source will be connected to the ground potential 39, while a voltage source 40 may establish the several second LED paths 24 via the driver unit 8, its current regulators 9, 10, 11, the individual light unit 2, 3, 4, its second LED-types 22 and the second electronic switch 6. Now if the first electronic switch 5 is in its non-conducting conduction state it will therefore interrupt each first LED path 23 in each light unit 2, 3, 4. Similarly if the second electronic switch 5 is in its non-conducting conduction state it will interrupt each second LED path 24 in each light unit 2, 3, 4. In other words if the first electronic switch 5 changes to its non-conducting conduction state, the current in each first LED path 23 will decrease below a certain value, where each first LED type 21 will change to its non-emitting lighting state, where the first LED types 21 emit no light. Similarly if the second electronic switch 6 changes to its non-conducting conduction state, the current in each second LED path 24 will decrease below a certain value, where each second LED type 22 will change to its non-emitting lighting state, where the second LED types 22 emit no light. On the other hand if the first electronic switch 5 is in its conducting conduction state, the current in each first LED path 23 will exceed a certain value, where each first LED type 21 will be in its emitting lighting state, where the first LED types 21 emit light. Similarly if the second electronic switch 6 is in its conducting conduction state, the current in each second LED path 24 will exceed a certain value, where each second LED type 22 will be in its emitting lighting state, where the second LED types 22 emit light.

The logic circuit 7 is connected to the first electronic switch 5 and the second electronic switch 6. A preferable configuration of the logic circuit 7 is described in detail later. Several configurations of the logic circuit 7 are possible since they depend on the configuration of the first electronic switch 5 and the second electronic switch 6 as described above. It is important that the logic circuit 7 is configured to alternately change on the basis of a control current Ic the conduction state of the first electronic switch 5 and the second electronic switch 6. Changing the conduction state in an alternately manner means that only the first electronic switch 5 or the second electronic switch 6 is conducting at a time. Consequently, only the first LED types 21 or the second LED types 22 will be in their emitting lighting state.

The fourth current regulator 12, or generally speaking the N+1st current regulator, is connected to the logic circuit 7 and configured to set the control current Ic. In the same way as described above it can mean that the control current Ic is limited by the fourth current regulator 12.

Each data register 13, 14, 15, 16 is assigned to one current regulator 9, 10, 11, 12. Means that the first data register 13 is assigned to the first current regulator 9, the second data register 14 is assigned to the second current regulator 10, the third data register 15 is assigned to the third current regulator 11 and the fourth data register 16 is assigned to the fourth current regulator 12. Generally speaking each data register 13, 14, 15, 16 selected from the N+1 data registers is assigned to one individual current regulator 9, 10, 11, 12 selected from the N+1 current regulators, while N is three in this configuration. Therefore the N+1st data register 16 is assigned to the N+1st current regulator 12.

Such a data register 13, 14, 15, 16 is a storage element and configured to hold digital data that defines or influences the operation of the corresponding current regulator 9, 10, 11, 12 of the driver unit 8. Consequently each data register selected from the N+1 data registers, hence selected from the four data registers 13, 14, 15, 16 is configured to store data that is representative of one corresponding current I1, I2, I3, Ic. Thus the first data register 13 is configured to store data representative of the first current I1, the second data register 14 is configured to store data representative of the second current I2, the third data register 15 is configured to store data representative of the third current I3 and the fourth data register 16, or in general the N+1st data register, is configured to store data representative of the control current Ic.

Following the function of such a data register as described above, the expression "representative of" means that the data stored in the data register governs the operation of the assigned current regulator in such a way that the current remains at the level specified by the data. It is clear that this applies to a circuit arrangement 1 when properly configured.

The data in each of four data registers 13, 14, 15, 16, or in general, in each of the N+1 data registers, is configurable through the communication interface 17. The communication interface 17 refers to a means of data transmission, such as a simple analog high/low signal, a modulated signal (e.g. PWM), a specific serial communication protocol, or a combination of these methods. Preferably, the communication interface 17 implements a specific serial communication protocol, such as CAN (Controller Area Network), LIN (Local Interconnect Network), FlexRay, MOST (Media Oriented Systems Transport), Automotive Ethernet, UART (including UART over CAN), SPI (Serial Peripheral Interface), or I2C (Inter-Integrated Circuit). The transmission medium for the data is independent of the communication method itself, meaning any known carrier for such signals is suitable, including, but not limited to, a single cable, a bundle of cables, or electromagnetic waves, such as those used in the wireless communication protocols like Bluetooth, Zigbee, or Wi-Fi.

The described embodiment of Fig. 1 uses a high-side driver unit 8, as shown. In such a configuration the anode of the first LED type 21 and the anode of the second LED type 22 of each light unit 2, 3, 4 are connected to the corresponding current regulator 9, 10, 11 via its drive node T3.

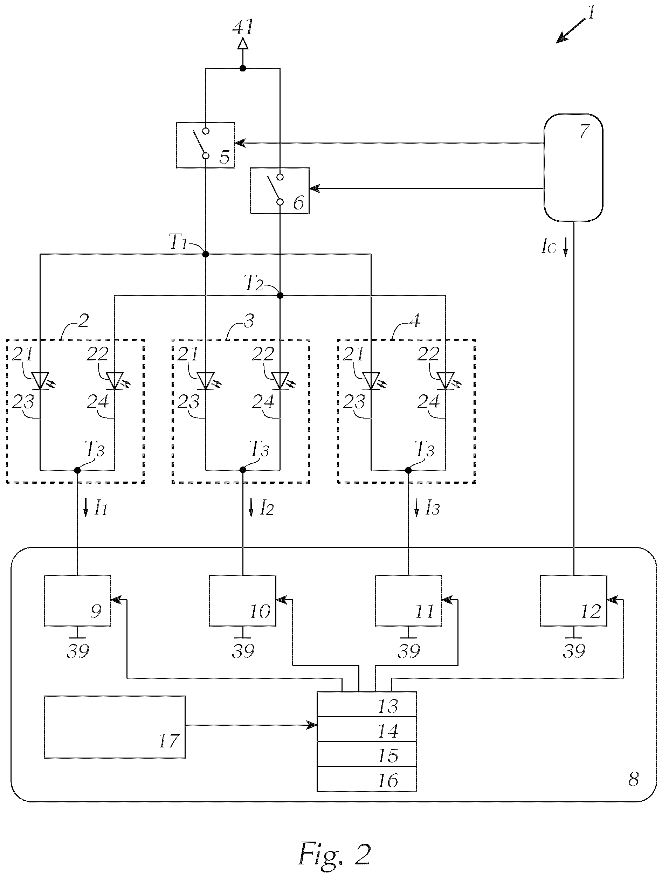

Fig. 2 shows a second embodiment that uses a low-side driver unit 8. In such a configuration the cathode of the first LED type 21 and the cathode of the second LED type 22 of each light unit 2, 3, 4 are connected to the corresponding current regulator 9, 10, 11 via its drive node T3. All features shown and described in connection with Fig. 1 are also applicable to the second embodiment of the circuit arrangement 1. Accordingly, the reference signs remain similar. It is clear that some modifications may be necessary for proper configuration, such as adjustments to the wiring of the first electronic switch 5 and the second electronic switch 6 in conjunction with the logic circuit 7. In this regard preferably a p-channel MOSFET, very preferably a logic-level p-channel MOSFET is used for both, the first electronic switch 5 and the second electronic switch 6.

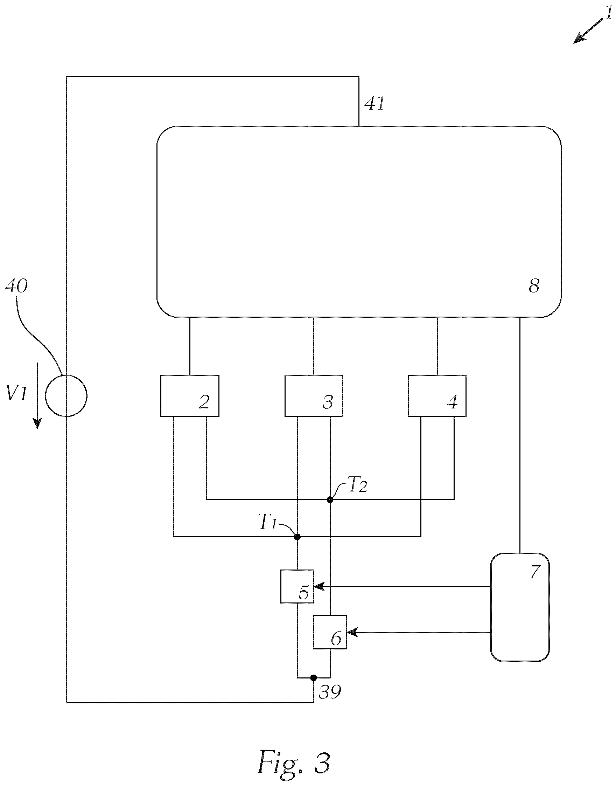

Fig. 3 shows a practical configuration with the possible voltage source 40, that provides a supply voltage V1 between a positive potential 41 and a ground potential 39 as mentioned earlier. Usually a power source in the form of a voltage source 40 is applied to such a circuit arrangement 1, which can provide a supply voltage V1 to the circuit arrangement 1, wherein the driver unit 8 and its current regulators 9, 10, 11, and 12 are connected to the positive potential 41, while the first electronic switch 5 and the second electronic switch 6 are connected to the ground potential 39. Of course, it is also possible to use additional electronic filter or protection elements in the configuration, which are not shown here.

In the configuration according to the second embodiment (Fig. 2), such a voltage source 40 can provide a supply voltage V1 to the circuit arrangement 1 too, wherein the first electronic switch 5 and the second electronic switch 6 are connected to the positive potential 41, while the driver unit 8 and its current regulators 9, 10, 11, and 12 are connected to the ground potential 39. The voltage source 40 may be configured as a switching converter, that provides a constant supply voltage V1 to the circuit arrangement 1.

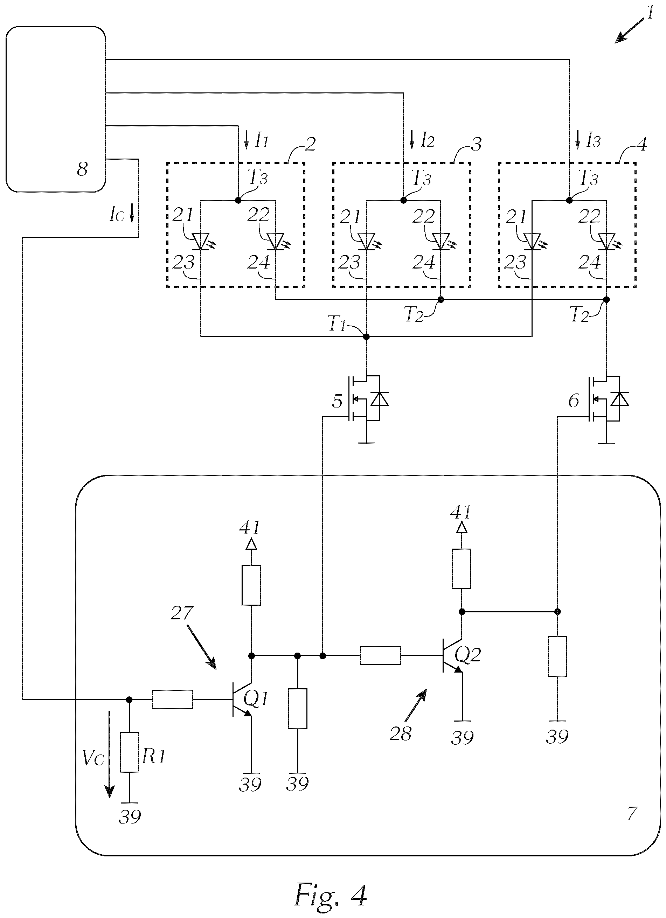

Fig. 4 shows the circuit arrangement 1 with the logic circuit 7 in detail. Since the logic circuit 7 is configured to alternately change on the basis of the control current Ic the conduction state of the first electronic switch 5 and the second electronic switch 6, it may comprise a first resistor R1 connected to the ground potential 39 in order to provide a control voltage Vc to a first inverter circuit 27. Thus, the input of the first inverter circuit 27 may be connected to the fourth current regulator 12, or in general to the N+1st current regulator. The first inverter circuit 27 may comprise a first transistor Q1 configured in an emitter circuit. The first transistor Q1 can be configured as a NPN BJT. The output of the first inverter circuit 27 is connected to the gate terminal of the first electronic switch 5, which is configured as an n-channel MOSFET. Therefore when the control current Ic exceeds a certain value, the first inverter circuit 27 will draw its output to the ground potential 39, which will cause then the first electronic switch 5 to change its conduction state to non-conducting.

The output of the first inverter circuit 27 is further preferably connected to the input of the second inverter circuit 28. The second inverter circuit 28 is preferably configured identically to the first inverter circuit 27 and may therefore comprise a second transistor Q2 configured in an emitter circuit. The second transistor Q2 can be configured as NPN BJT too. The output of the second inverter circuit 28 is preferably connected to the gate terminal of the second electronic switch 6, which is configured as an n-channel MOSFET. Since the output of the first inverter circuit 27 is drawn to the ground potential 39, when the control current Ic exceeds a certain value, the voltage applied to the gate terminal of the second electronic switch 6 will exceed a value, that causes it to change its conduction state to conducting.

The described configuration of the logic circuit 7 may, with some modifications as mentioned in the description of Fig. 2, be also applicable to the second embodiment.

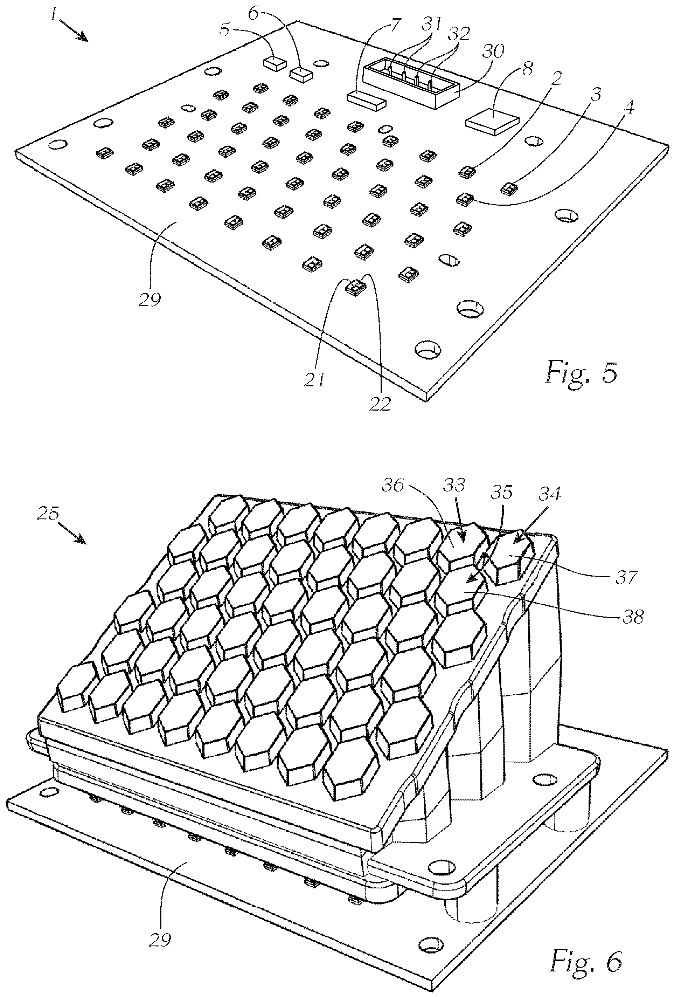

Fig. 5 and Fig. 6 illustrate a practicable use case of the circuit arrangement 1, demonstrating its functionality in a specific application without limiting its scope to this particular implementation. All features shown and described in connection with the first embodiment and the second embodiment are also applicable to this implementation. Accordingly, the reference signs remain similar.

Fig. 5 shows the circuit arrangement 1 assembled on a printed circuit board 29. The assembled printed circuit board 29 comprises several light units 2, 3, 4, a first electronic switch 5, a second electronic switch 6, a logic circuit 7 and a driver unit 8. In this example forty-eight light units 2, 3, 4 are assembled, consequently N = 48 in this configuration. Each light unit 2, 3, 4 is implemented as a dual color LED package, i.e. an electronic component comprising the first LED-type 21 and the second LED-type 22 in one electronic package, e.g. a surface-mount device. The emitted light color in their emitting lighting states of the first LED-type 21 and the second LED-type 22 may be different as described before. Since N = 48, the driver unit 8 comprises at least forty-nine current regulators and at least forty-nine data registers. The assembled printed circuit board 29 may comprise also a plug 30, that includes a communication terminal 31 connected to the communication interface 17 of the driver unit 8. Furthermore the plug 30 includes a supply terminal 32, which is connected to the circuit arrangement 1 as described before, consequently the supply terminal 32 is configured to distribute a supply voltage V1 to the whole circuit arrangement 1 assembled on the printed circuit board 29.

Fig. 6 shows a part of a vehicle lamp 25 implementing the circuit arrangement 1 in a configuration described with Fig. 5. The vehicle lamp 25 comprises forty-eight segments 33, 34, 35, or in general N segments. Each of the segments 33, 34, 35 comprises an optical element 36, 37, 38. Each of the segments 33, 34, 35 further comprises one individual light unit 2, 3, 4 selected from the forty-eight light units, or in general, selected from the N light units.

Each optical element 36, 37, 38 is configured to be illuminated by the first LED type 21 and the second LED type 22 of the corresponding light unit 2, 3, 4. The first LED type 21 of the forty-eight light units 2, 3, 4 are collectively configured to carry out a first light function in their emitting lighting state. The second LED type 22 of the forty-eight light units 2, 3, 4 are collectively configured to carry out a second light function in their emitting lighting state. That means the LED types 21, 22 are arranged or set up in a way that they work together as a group, what can be realized according to the invention, because the first LED type 21 of every light unit are collectively controlled by the first electronic switch 5 and the second LED type 22 of every light unit are collectively controlled by the second electronic switch 6.

The optical elements 36, 37, 38 are preferably identical in terms of their optical effects. They may be configured as diffusing optical elements, such that they diffuse the light emitted from the corresponding light units 2, 3, 4.

As shown all segments 33, 34, 35 are arranged in a matrix configuration in order to form at least a part of a display. Since each of the segments 33, 34, 35 is configured to be illuminated by a first LED-type 21 and a second LED-type 22, it is possible to display readable information, e.g. in the form of symbols, status indicators or notifications. To achieve this the number of segments 33, 34, 35 and therefore the number of light units 2, 3, 4 has to be sufficient, but since the circuit arrangement 1 of the invention is easily scalable, it can accommodate multiple light units 2, 3, 4, allowing it to meet requirements in a highly customizable manner.

In addition to the ability to display readable information, the vehicle lamp 25 can also fulfill a first light function and a second light function, as described above. Said first light function and said second light function are preferably different light functions selected from a group of light functions comprising daytime running light, position light, turn indicator light, tail light, break light, reverse light and rear fog light. The group of light functions may also be restricted to the mentioned light functions, such that the group of light functions consists of the mentioned light functions.

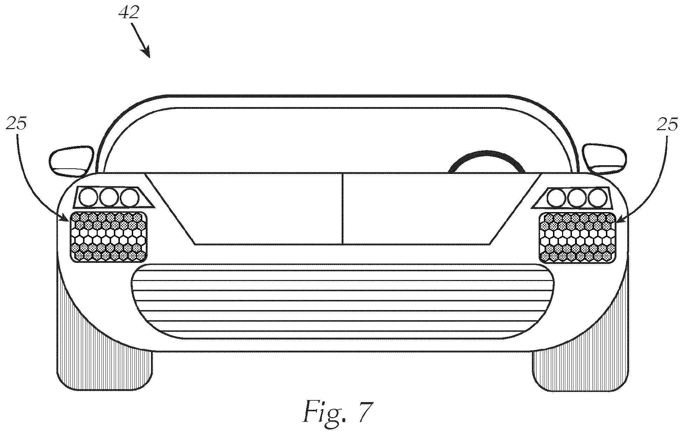

Especially when the invention is implemented as a vehicle lamp 25 to display information while additionally fulfilling light functions, it can be integrated into the tail light system or front lighting system of a vehicle 42, as shown in Fig. 7. This implementation allows for efficient use of space and functionality, enhancing both informational and lighting capabilities within the vehicle's design.

The invention is not limited to the embodiments shown but is defined by the entire scope of protection of the claims. Individual aspects of the invention or of the embodiments can also be taken up and combined with one another. Any reference signs in the claims are exemplary and serve only the purpose to allow easier review without restricting the claims.

## Claims

1. Circuit arrangement (1) for a vehicle lamp, said circuit arrangement (1) comprises a number of N light units, a first electronic switch (5), a second electronic switch (6), a logic circuit (7) and a driver unit (8) that comprises N+1 current regulators, N+1 data registers and a communication interface (17),
wherein each light unit (2, 3, 4) selected from the N light units is operable with an individual current (I1, I2, I3) selected from N currents and wherein each light unit (2, 3, 4) comprises a drive node (T3), a first LED type (21) and a second LED type (22), while said first LED type (21) is connected in a first LED path (23) between the drive node (T3) and a first common node (T1), and while said second LED type (22) is connected in a second LED path (24) between the drive node (T3) and a second common node (T2), wherein both, the first LED type (21) and the second LED type (22) are operable in a lighting state, which is either emitting or non-emitting,
wherein each light unit (2, 3, 4) is connected to one individual current regulator (9, 10, 11) selected from the first N of the N+1 current regulators via its drive node (T3), while said individual current regulator (9, 10, 11) is configured to set the individual current (I1, I2, I3) for the corresponding light unit (2, 3, 4),
wherein the first electronic switch (5) and the second electronic switch (6) are both operable in a conduction state, which is either conducting or non-conducting,
wherein the first electronic switch (5) is connected to the first common node (T1), such that a non-conducting conduction state of the first electronic switch (5) interrupts the first LED path (23) in each light unit (2, 3, 4),
wherein the second electronic switch (6) is connected to the second common node (T2), such that a non-conducting conduction state of the second electronic switch (6) interrupts the second LED path (24) in each light unit (2, 3, 4),
wherein the logic circuit (7) is connected to the first electronic switch (5) and the second electronic switch (6), further said logic circuit (7) is configured to alternately change on the basis of a control current (Ic) the conduction state of the first electronic switch (5) and the second electronic switch (6), such that only the first electronic switch (5) or the second electronic switch (6) is conducting at a time,
wherein the N+1st current regulator (12) is connected to the logic circuit (7) and configured to set the control current (Ic),
wherein each data register (13, 14, 15) selected from the first N of the N+1 data registers is assigned to one individual current regulator (9, 10, 11) selected from the first N of the N+1 current regulators and configured to store data representative of one corresponding individual current (I1, I2, I3) selected from the N currents,
wherein the N+1st data register (16) is assigned to the N+1st current regulator (12) and configured to store data representative of the control current (Ic),
wherein the data in each of the N+1 data registers (13, 14, 15, 16) is configurable through the communication interface (17).

2. Circuit arrangement (1) according to claim 1, wherein the first LED type (21) differs from the second LED type (22) in respect of the emitted light color in their emitting lighting states, while the emitted light color is selected from a group of light colors comprising: white light, red light, green light, blue light, and amber light.

3. Circuit arrangement (1) according to any of the claims 1 or 2, wherein the driver unit (8) is a high-side driver unit (8), wherein the anode of the first LED type (21) and the anode of the second LED type (22) of each light unit (2, 3, 4) are connected to the corresponding current regulator (9, 10, 11) via its drive node (T3).

4. Circuit arrangement (1) according to any of the claims 1 or 2, wherein the driver unit (8) is a low-side driver unit (8), wherein the cathode of the first LED type (21) and the cathode of the second LED type (22) of each light unit (2, 3, 4) are connected to the corresponding current regulator (9, 10, 11) via its drive node (T3).

5. Circuit arrangement (1) according to any of the claims 1 to 4, wherein the logic circuit (7) comprises a first inverter circuit (27) and a second inverter circuit (28), while said first inverter circuit (27) being connected at its input to the N+1st current regulator (12) and at its output to the first electronic switch (5) and the input of the second inverter circuit (28), while said second inverter circuit (28) is connected at its output to the second electronic switch (6).

6. Circuit arrangement (1) according to any of the claims 1 to 5, wherein the circuit arrangement (1) is assembled on one printed circuit board (29), that comprises a communication terminal (31) connected to the communication interface (17) and a supply terminal (32), which is configured to distribute a supply voltage (V1) to the whole circuit arrangement (1).

7. vehicle lamp (25) comprising the circuit arrangement (1) according to any of the claims 1 to 6.

8. Vehicle lamp (25) according any of the claim 7, wherein the vehicle lamp (25) comprises N segments, while each segment (33, 34, 35) selected from the N segments comprises an optical element (36, 37, 38) and one individual light unit (2, 3, 4) selected from the N light units, while said optical element (36, 37, 38) is configured to be illuminated by the first LED type (21) and the second LED type (22) of the corresponding light unit (2, 3, 4), while the first LED type (21) of the light units (2, 3, 4) are collectively configured to carry out a first light function in their emitting lighting state, while the second LED type (22) of the light units (2, 3, 4) are collectively configured to carry out a second light function in their emitting lighting state.

9. Vehicle lamp (25) according to claim 8, wherein the segments (33, 34, 35) are arranged in a matrix configuration, such that they form together at least a part of a display.

10. Vehicle lamp (25) according to claim 8 or 9, wherein said first light function and said second light function are different light functions selected from a group of light functions comprising: daytime running light, position light, turn indicator light, tail light, break light, reverse light and rear fog light.

11. Vehicle (42) comprising the vehicle lamp (25) according to any of the claims 7 to 10.
